(19) Europäisches Patentamt
European Patent Office
Office européen des brevets

(11) **EP 2 950 057 B1**

(12) **EUROPÄISCHE PATENTSCHRIFT**

(45) Veröffentlichungstag und Bekanntmachung des Hinweises auf die Patenterteilung:
**26.10.2016 Patentblatt 2016/43**

(51) Int Cl.:
*G01D 5/347* (2006.01)  *G01D 5/36* (2006.01)
*H04N 1/00* (2006.01)  *G01P 3/38* (2006.01)

(21) Anmeldenummer: **14193626.0**

(22) Anmeldetag: **18.11.2014**

(54) **Drehwinkelsensorsystem**

Rotation angle sensor system

Système de capteur d'angle de rotation

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**02.12.2015 Patentblatt 2015/49**

(73) Patentinhaber: **Espros Photonics AG**
**7320 Sargans (CH)**

(72) Erfinder: **De Coi, Beat**
**7320 Sargans (CH)**

(74) Vertreter: **Otten, Roth, Dobler & Partner mbB**
**Patentanwälte**
**Großtobeler Straße 39**
**88276 Berg / Ravensburg (DE)**

(56) Entgegenhaltungen:
**EP-A1- 2 700 911  WO-A1-2004/094957**
**WO-A1-2013/174707**

**Beschreibung**

Die Erfindung betrifft ein Drehwinkelsensorsystem zur Erfassung der Drehwinkelstellung einer sich um eine Drehachse drehenden Drehwelle.

Aus dem Stand der Technik, z.B. in WO 2004/094957 A1, sind Drehwinkelsensorsysteme bekannt, die eine Markierung auf der Drehwelle optisch verfolgen.

Es ist Aufgabe der Erfindung ein verbessertes Drehwinkelsensorsystem bereit zu stellen.

Diese Aufgabe wird, ausgehend von einem Drehwinkelsensorsystem der eingangs genannten Art, durch ein Drehwinkelsensorsystem nach Anspruch 1 und einen Drehwinkelsensor nach Anspruch 14 gelöst. Vorteilhafte Ausgestaltungen sind in den weiteren abhängigen Ansprüchen angegeben.

Das erfindungsgemäße Drehwinkelsensorsystem ist ein Drehwinkelsensorsystem zur Erfassung der Drehwinkelstellung und/oder der Winkelgeschwindigkeit einer Drehwelle die sich entlang einer Drehachse erstreckt, mit mindestens zwei optischen Markierungen an der Drehwelle, mit einem optischen Sensor mit einer Pixelmatrix mit Pixelpunkten, mit einer Abbildungseinrichtung zur Abbildung jeder Markierung in im wesentlichen axialer Richtung auf der Pixelmatrix als ein Markierungsbild, und mit einer Auswerteeinrichtung zur Auslese und Auswertung der Pixelmatrix um Daten zur Drehwinkelstellung und/oder Winkelgeschwindigkeit zu bestimmen, wobei die Markierungen, die Abbildungseinrichtung und Pixelpunkte so ausgebildet sind, dass die Markierungsbilder auf der Pixelmatrix mindestens die Fläche eines Pixelpunktes aufweisen, wobei die Auswerteeinrichtung dazu ausgebildet ist, die Lage der Schwerpunkte der Markierungsbilder auf der Pixelmatrix zu ermitteln. Insbesondere können die Schwerpunkte der Markierungsbilder auf der Pixelmatrix in Sub-Matrixeinteilung ermittelt werden.

Die Grösse der Pixelpunkte, die Fläche der Markierungen und die Abbildungseinrichtung sind so aufeinander abgestimmt, dass sich die beschriebene Mindestfläche auf der Pixelmatrix durch die Markierungsbilder ausbildet.

Im Wesentlichen axiale Abbildung meint, dass die Abbildung im Wesentlichen in Verlängerung der Drehwelle ausgeführt ist, mit einem Betrachtungswinkel zur Drehachse von insbesondere kleiner 45°, insbesondere kleiner 10°, insbesondere kleiner 2°, insbesondere von 0°.

Pixelmatrix bedeutet das Feld der Pixelmatrix das maximal zur Auswertung kommen soll. Prinzipiell nicht zur Auslese und/oder Auswertung herangezogene Reihen oder Spalten zählen nicht zur Pixelmatrix der Erfindung.

Fläche bedeutet für ein Markierungsbild den Wert der Grösse seiner Gesamtfläche. Fläche bedeutet für einen Pixelpunkt den Wert der Grösse der Fläche des Rechtecks aufgespannt aus den Flächenschwerpunkten von 4 unmittelbar angrenzenden Pixelpunkten.

Sub-Matrixteilung meint, dass die Lage des Schwerpunktes innerhalb des Pixelfeldes in höherer Auflösung als das Pixelfeld ermittelt wird, insbesondere in mehrfacher Auflösung, also zum Beispiel in doppelter, vierfacher oder achtfacher Auflösung. Dies kann erreicht werden, indem die teilweise Überdeckung eines Pixelpunktes durch ein Matrixbild durch die dadurch erzeugte begrenzte Helligkeitsänderung detektiert wird. Insbesondere kann jede Markierungen dunkel, insbesondere schwarz sein während der Hintergrund der Markierungen hell, insbesondere weiss, hellgrau oder silbern ist. Die Auswerteeinrichtung kann insbesondere dazu ausgebildet sein, die Lage der Schwerpunkte der einzelnen Markierungsbilder auf der Pixelmatrix durch Auswertung von Teilüberdeckungen von benachbarten Pixelpunkten durch Markierungsbilder, insbesondere durch Bestimmung der Grauwerte der mindestens teilweise überdeckten Pixelpunkte und durch anschliessende Gewichtung dieser Pixelpunkte zu ermitteln.

Bei vorgegebener Winkelauflösung erlaubt die Sub-Matrix-Auswertung der Schwerpunkte der Markierungsbilder die Verwendung der begrenzt grossen Pixelmatrix. Diese Verwendung einer begrenzt grossen Pixelmatrix kann den Vorteil aufweisen, dass die Datenrate reduziert und die Pixelmatrix schneller ausgelesen werden kann und somit eine höhere Mess-Wiederholungsrate bereitgestellt werden kann wobei die Winkelgenauigkeit abnimmt. Die Datenrate wächst mit dem Quadrat der Zeilen der Pixelmatrix. Es zeigt sich, dass eine ausreichend schnelle Auswertung einer Pixelmatrix oder von Bereichen mit einer Anzahl entsprechend mehr als 128 x 128 Pixelpunkten unter Umständen nicht mehr sinnvoll möglich ist. Eine sehr gute Abwägung von Auslesegeschwindigkeit und Winkelauflösung kann unter Umständen mit einem 64 x 64 Pixelarray erreicht werden. Bei einem 16 x 16 Pixelarray kann bei sehr schneller Auslese unter Umständen immerhin noch eine Winkelauflösung von +/- 0,5° erreicht werden.

Die Auswerteeinrichtung kann insbesondere dazu ausgebildet sein, die Pixelmatrix in konstanten zeitlichen Abständen auszulesen und auszuwerten. Diese konstanten zeitlichen Abstände können die Wiederholrate des Drehwinkelsensorsystems zur erneuten Wiedergabe eines Messwerts ausbilden. Ein Zwischenergebnis der zeitlich konstanten Auslese können zeitlich verschiedene Pixelbilder sein.

Vorzugsweise können das Drehwinkelsensorsystem und die Auswerteeinrichtung dazu ausgebildet sein, eine Wiederholrate von grösser 1000 Herz (Messwerte pro Sekunde) oder von grösser 10000 Herz oder von grösser 100000 Herz bereit zu stellen.

Die optische Erfassung der Markierungen kann den Vorteil aufweisen, dass die Winkeldetektion berührungslos erfolgen kann und/oder durch eine Glasabtrennung hindurch auch räumlich getrennt erfolgen kann und/oder über vergleichsweise lange Distanzen von etwa mindestens dem 10, 100, 1000, 10000 oder 100000-fachen des Markierungsabstandes, etwa mittels eines Teleobjektivs erfolgen kann.

Die Verwendung von mindestens 2 Markierungen kann den Vorteil aufweisen, dass die Detektion robust gegenüber Vibrationen der Welle und/oder gegen nicht zentrische Abbildung ist.

Vorzugsweise weisen die Markierungsbilder höchstens die 100-fache, insbesondere höchstens die 64-fache, insbesondere höchstens die 36-fache, insbesondere höchstens die 16-fache, insbesondere höchstens die 4-fache, insbesondere höchstens die einfache Fläche eines Pixelpunktes auf.

Diese Begrenzung der Grösse der Markierungsbilder auf der Pixelmatrix kann eine Verkleinerung der Pixelmatrix und/oder eine Verkleinerung der auf der Pixelmatrix auszulesenden Teilbereiche erlauben ohne dass die Winkelauflösung im selben Masse sinkt. Das Verhältnis von Winkelauflösung und Wiederholrate kann so optimiert werden.

Vorzugsweise weisen die Markierungsbilder mindestens die 1-fache, insbesondere die 2-fache, insbesondere mindestens die 4-fache, insbesondere mindestens die 16-fache Fläche eines Pixelpunktes auf.

Dies kann den Vorteil haben, dass mehr Pixelpunkte zur Berechnung der Schwerpunkte herangezogen werden können, sodass die Auswertung genauer wird.

Vorzugsweise weist die Pixelmatrix höchstens 128 x 128 Pixelpunkte, insbesondere höchstens 64 x 64 Pixelpunkte, insbesondere höchstens 32 x 32 Pixelpunkte, insbesondere höchstens 16x16 Pixelpunkte, insbesondere höchstens 8x8 Pixelpunkte auf.

Dies kann ausreichend sein, um eine ausrechend hohe Winkelauflösung bereit zu stellen und den Vorteil aufweisen, die Auslesegeschwindigkeit und damit die Mess-Wiederholungsrate der Erfindung weiter zu erhöhen.

Pixelmatrix höchstens N x N Pixelpunkte bezeichnet eine Pixelmatrix von N x N Punkten oder eine grössere Pixelmatrix von der nur ein Bereich von N x N ausgelesen wird.

Vorzugsweise ist die Auswerteeinrichtung dazu ausgebildet, höchstens eine Anzahl entsprechend 128 x 128 Pixelpunkten auszulesen und/oder auszuwerten, insbesondere höchstens entsprechend 64 x 64, insbesondere höchstens entsprechend 32 x 32, insbesondere höchstens entsprechend 16 x 16, insbesondere höchstens entsprechend 8 x 8, insbesondere höchstens entsprechend 4 x 4, insbesondere höchstens entsprechend 2 x 2.

Die Restlichen Pixelpunkte der Pixelmatrix werden nicht ausgelesen und/oder ausgewertet und verschlechtern somit nicht sinnlos die Wiederholrate. Dies kann ausreichend sein, um eine ausrechend hohe Winkelauflösung bereit zu stellen und den Vorteil aufweisen, die Auslesegeschwindigkeit und damit die Mess-Wiederholungsrate der Erfindung weiter zu erhöhen.

Vorzugsweise ist jede Markierung auf einer gedachten oder realen Fläche im Winkel zur Drehachse, insbesondere auf einer Fläche senkrecht zur Drehachse, insbesondere auf einer Endfläche der Drehachse angeordnet. Dies kann den Vorteil aufweisen, dass die Abbildung einfach wird.

Vorzugsweise ist jede Markierung eine optische Markierung mit einem Helligkeits- oder Farbunterschied zum Hintergrund im sichtbaren und/oder im IR- und/oder im UV-Spektrum. Insbesondere können die Markierungen dunkel, insbesondere schwarz sein während der Hintergrund der Markierungen hell, insbesondere weiss, hellgrau oder silbern ist. Vorzugsweise ist entsprechend die Pixelmatrix und die Abbildungseinrichtung im selben optischen Spektrum aktiv. Dies kann die einfache Abbildung und Detektion der Markierungen erleichtern.

Vorzugsweise ist jede Markierung von ausgefüllt runder Form. Dies kann die Auswertung der Teilüberdeckung der Pixelpunkte durch Markierungsbilder und/oder die Interpolation der Schwerpunkte erleichtern.

Denkbar ist auch eine zentrisch zur Drehachse kreislinienförmige Form einer Markierung.

Vorzugsweise sind die Markierungen durch angrenzende Flächen komplementärer Farbe gebildet, insbesondere durch eine weisse und eine schwarze Halbkreisfläche, die sich zu einer zur Drehachse im Wesentlichen konzentrischen Kreisfläche zusammensetzt.

Vorzugsweise sind genau 2 Markierungen vorhanden. Dies kann den Vorteil haben, dass mit geringem Auswertungsaufwand und mit hoher Wiederholrate die Winkelbewegung verfolgt werden kann.

Vorzugsweise weisen mindestens zwei Markierungen eine unterschiedliche Grösse und/oder Form ihrer Flächen auf. Dies kann den Vorteil aufweisen, dass stets eine eindeutige Bestimmung des aktuellen Winkels möglich ist.

Vorzugsweise sind mindestens oder genau 3 Markierungen vorhanden. Dies kann den Vorteil aufweisen, dass stets eine eindeutige Bestimmung des aktuellen Winkels möglich ist.

Vorzugsweise sind bei der Verwendung die mindestens 3 Markierungen nicht alle in gleichem Winkelabstand zueinander um die Drehachse angeordnet. Dies kann den Vorteil aufweisen, dass stets eine eindeutige Bestimmung des aktuellen Winkels möglich ist.

Vorzugsweise weist jede Markierung den gleichen Abstand zur Drehachse auf. Dies kann den Vorteil haben, dass eine maximale Winkelauflösung erreicht wird.

Vorzugsweise sind die Markierungen in radialer Symmetrie zur Drehachse angeordnet. Dies kann den Vorteil haben, dass eine maximale Winkelauflösung erreicht wird.

Vorzugsweise ist die Auswerteeinrichtung dazu ausgebildet, die Lage der Schwerpunkte der Markierungsbilder auf der Pixelmatrix durch Auswertung von Teilüberdeckungen von Pixelpunkten durch Markierungsbilder zu ermitteln, insbesondere durch Auswertung von Grauwerten der ein Markierungsbild darstellenden Pixelpunkte, insbesondere durch Gewichtung der Lage der einzelnen ein Markierungsbild darstellenden Pixelpunkte aufgrund ihrer jeweiligen Helligkeitswerte.

Dies kann den Vorteil ausbilden, dass die Lage der Schwerpunkte in Submatrixteilung ermittelt werden kann womit für gleiche Auflösung eine geringere Pixelanzahl nötig ist.

Ein Schwerpunkt könnte grundsätzlich durch einfache Mittelung der x- und y-Lage aller von einem Markierungsbild berührten Pixelpunkte gebildet werden deren Helligkeitswert eine bestimmte Schwelle überwindet. Günstiger weise wird das Pixelbild jedoch als Graustufenbild oder Farbbild aufgenommen. Damit können den von einem Markierungsbild berührten Pixelpunkten Gewichtungsfaktoren zugewiesen werden, die der Änderung ihres Helligkeitswertes durch das Markierungsbild entspricht. Die Mittelung der x- und y-Lage über alle so gewichteten von einem Markierungsbild berührten Pixelpunkte kann eine noch genauere Bestimmung des Schwerpunkts ergeben.

Vorzugsweise ist die Auswerteeinrichtung dazu ausgebildet, aus den Schwerpunkten der Markierungsbilder auf der Pixelmatrix einen Messwert zu generieren für die Drehwinkelstellung und/oder Drehwinkelveränderung und/oder Winkelgeschwindigkeit und/oder Winkelbeschleunigung der Drehwelle insbesondere durch Trigonometrie und/oder insbesondere durch Vergleich mit dem Messwert oder den Schwerpunkten einer oder mehrerer vorhergehender Pixelbilder.

Vorzugsweise ist die Auswerteeinrichtung dazu ausgebildet, aus der Lage der Schwerpunkte und/oder Daten zur Bildausdehnung der Markierungsbilder eines oder mehrerer zeitlich versetzter Pixelbilder und/oder bestimmter Daten zur Drehwinkelstellung und/oder Winkelgeschwindigkeit einen oder mehrere Teilbereiche der Pixelmatrix zu bestimmen, insbesondere entsprechend der Anzahl an Markierungen, innerhalb derer die Markierungsbilder für ein folgendes Pixelbild mindestens teilweise erwartet werden und für dieses folgende Pixelbild ausschliesslich den einen oder die mehrere Teilbereiche der Pixelmatrix auszuwerten.

Dieses auch Region of Interest genannte Verfahren kann den Vorteil aufweisen, dass die Datenrate weiter reduziert und die Wiederholrate erhöht und/oder die Auflösung durch eine grössere Pixelzahl der Pixelmatrix bei etwa konstanter Datenrate erhöht werden kann.

Der erfindungsgemässe Drehwinkelsensor ist ein Drehwinkelsensor zur Verwendung in einem Drehwinkelsensorsystem wie oben beschrieben zur Erfassung der Drehwinkelstellung und/oder der Winkelgeschwindigkeit einer Drehwelle die sich entlang einer Drehachse erstreckt und zur Abbildung von mindestens zwei optischen Markierungen an einer Drehwelle, mit einem optischen Sensor mit einer Pixelmatrix mit Pixelpunkten , mit einer Abbildungseinrichtung zur Abbildung jeder Markierung in im wesentlichen axialer Richtung auf der Pixelmatrix als ein Markierungsbild, und mit einer Auswerteeinrichtung zur Auslese und Auswertung der Pixelmatrix um Daten zur Drehwinkelstellung und/oder Winkelgeschwindigkeit zu bestimmen, wobei die Abbildungseinrichtung und Pixelpunkte so ausgebildet sind, dass die Markierungsbilder auf der Pixelmatrix mindestens die Fläche eines Pixelpunktes aufweisen, wobei die Pixelmatrix und die Auswerteeinrichtung wie oben beschrieben ausgebildet sein kann.

Weitere Merkmale der Erfindung sind in den Zeichnungen angegeben.

Die jeweils genannten Vorteile können sich auch für Merkmalskombinationen realisieren in deren Zusammenhang sie nicht genannt sind.

Überblick über die Zeichnungen:

Ausführungsbeispiele der Erfindung sind in den Zeichnungen dargestellt und werden im Folgenden näher erläutert. Gleiche Bezugszeichen in den einzelnen Figuren bezeichnen dabei einander entsprechende Elemente. Es zeigen:

Figur 1    Drehwinkelsensorsystem mit Drehwelle
Figur 2    Pixelmatrix mit Markierungsbilder

Detaillierte Beschreibung der Zeichnungen:

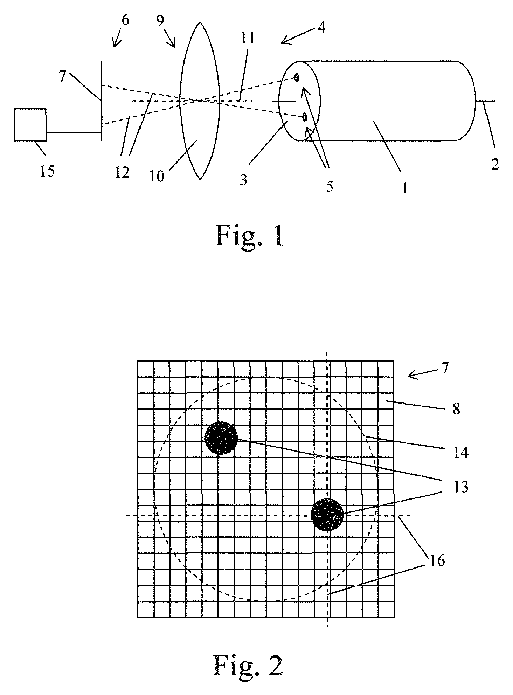

Fig. 1 zeigt das Drehwinkelsensorsystem 4 mit Drehwelle 1. Die Drehwelle ist drehbar um ihre Drehachse 2 gelagert und weist auf ihrer senkrecht zur Drehachse angeordneten hellen Endfläche 3 zwei runde schwarze Markierungen 5 auf. Die Abbildungseinrichtung 9 weist eine Linse 10 auf die die Markierungen in axialer Richtung 11 auf die Pixelmatrix 7 des Sensors 6 abbilden, wie es die Abbildungsstrahlen 12 anzeigen. Die Abbildung auf der Pixelmatrix wird durch die Auswerteeinrichtung 15 ausgelesen und ausgewertet.

Fig. 2 zeigt die Pixelmatrix 7 mit 16 mal 16 Pixelpunkten 8. Die Grösse der Markierungen, die Abbildungseinrichtung und die Grösse der Pixelpunkte ist so aufeinander abgestimmt, dass die zwei abgebildeten Markierungsbilder 13 der Markierungen bei der Drehung der Drehachse stets auf der Pixelmatrix abgebildet werden und etwa die 2,5-fache Fläche eines Pixelpunktes aufweisen. Zur Illustration ist der gedachte abgebildete Drehwellenumfang 14 dargestellt.

Die teilweise Überdeckung der Pixelpunkte durch die Markierungsbilder wird von der mit der Pixelmatrix verbundenen Auswerteeinrichtung 15 als Grauwertstufenwert ausgewertet und aus den Grauwertstufenwerten mehrere benachbarter Pixelpunkte die Schwerpunktkoordinaten 16 eines jeden Markierungsbildes als ein Interpolationsverfahren errechnet. Aus den Schwerpunktkooridnaten der zwei Markierungsbilder errechnet die Auswerteeirichtung einen Winkelwert phi für die Drehwinkelstellung der Drehwelle um ihre Drehachse nach bekannter Trigonometrie nach

$$phi = arctan \left( ( y1 - y2 ) / ( x1 - x2 ) \right)$$

wobei x1 und y1 die Schwerpunktkoordinaten des einen Markierungsbildes und x2 und y2 die Schwerpunktkoordinaten des anderen Markierungsbildes sind.

Drehwinkeländerungen werden entsprechend als Differenz des Winkelwerts, Drehwinkelgeschwindigkeit als Differenz des Winkelwerts pro Zeit und Drehwinkelbeschleunigung als Differenz der Drehwinkelgeschwindigkeit pro Zeit berechnet.

Bezugszeichenliste:

| 1 | Drehwelle |
| 2 | Drehachse |
| 3 | Endfläche |
| 4 | Drehwinkelsensor, Drehwinkelsensorsystem |
| 5 | Optische Markierung |
| 6 | Optischer Sensor |
| 7 | Pixelmatrix |
| 8 | Pixelpunkt |
| 9 | Abbildungseinrichtung |
| 10 | Linse |
| 11 | Axiale Richtung |
| 12 | Abbildungsstrahlen |
| 13 | Markierungsbild |
| 14 | abgebildeter Drehwellenumfang |
| 15 | Auswerteeinrichtung |
| 16 | Schwerpunktlinie |

**Patentansprüche**

1. Drehwinkelsensorsystem (4)

   - zur Erfassung der Drehwinkelstellung und/oder der Winkelgeschwindigkeit einer Drehwelle (1) die sich entlang einer Drehachse (2) erstreckt,
   - mit mindestens zwei optischen Markierungen (5) an der Drehwelle,
   - mit einem optischen Sensor (6) mit einer Pixelmatrix (7) mit Pixelpunkten (8),
   - mit einer Abbildungseinrichtung (9) zur Abbildung jeder Markierung in im wesentlichen axialer Richtung (11) auf der Pixelmatrix als ein Markierungsbild (13), und
   - mit einer Auswerteeinrichtung (15) zur Auslese und Auswertung der Pixelmatrix um Daten zur Drehwinkelstellung und/oder Winkelgeschwindigkeit zu bestimmen,
   - wobei die Markierungen, die Abbildungseinrichtung und Pixelpunkte so ausgebildet sind, dass die Markierungsbilder auf der Pixelmatrix mindestens die Fläche eines Pixelpunktes aufweisen,

   **dadurch gekennzeichnet, dass**

   - die Auswerteeinrichtung dazu ausgebildet ist, die Lage der Schwerpunkte (16) der Markierungsbilder auf der Pixelmatrix in Sub-Matrixteilung zu ermitteln.

2. Drehwinkelsensorsystem nach Anspruch 1, **dadurch gekennzeichnet, dass** die Markierungen, die Abbildungseinrichtung und Pixelpunkte dazu ausgebildet sind, dass die Markierungsbilder

   - höchstens die 100-fache, insbesondere höchstens die 64-fache, insbesondere höchstens die 36-fache, insbesondere höchstens die 16-fache, insbesondere höchstens die 4-fache, insbesondere höchstens die einfache Fläche eines Pixelpunktes aufweisen und/oder
   - mindestens die 1-fache, insbesondere mindestens die 2-fache, insbesondere mindestens die 4-fache, insbesondere mindestens die 16-fache Fläche eines Pixelpunktes aufweisen.

3. Drehwinkelsensorsystem nach einem der vorgenannten Ansprüche, **dadurch gekennzeichnet, dass**

   - die Pixelmatrix höchstens 128 x 128 Pixelpunkte, insbesondere höchstens 64 x 64, insbesondere höchstens 32 x 32, insbesondere höchstens 16 x 16, insbesondere höchstens 8 x 8 Pixelpunkte aufweist und/oder
   - die Auswerteeinrichtung dazu ausgebildet ist, höchstens eine Anzahl entsprechend 128 x 128 Pixelpunkten auszulesen und/oder auszuwerten, insbesondere höchstens entsprechend 64 x 64, insbesondere höchstens entsprechend 32 x 32, insbesondere höchstens entsprechend 16 x 16, insbesondere höchstens entsprechend 8 x 8, insbesondere höchstens entsprechend 4 x 4, insbesondere höchstens entsprechend 2 x 2.

4. Drehwinkelsensorsystem nach einem der vorgenannten Ansprüche, **dadurch gekennzeichnet, dass** jede Markierung auf einer Fläche (3) im Winkel zur Drehachse, insbesondere auf einer Fläche (3) senkrecht zur Drehachse, insbesondere auf einer Endfläche (3) der Drehachse angeordnet ist.

5. Drehwinkelsensorsystem nach einem der vorgenannten Ansprüche, **dadurch gekennzeichnet, dass** jede Markierung, die Pixelmatrix und die Abbildungseinrichtung im sichtbaren und/oder im IR und/oder UV-Spektrum optisch wirksam sind, insbesondere, dass die Markierung als weisse Markierung auf schwarzem Grund oder umgekehrt gebildet ist.

6. Drehwinkelsensorsystem nach einem der vorgenannten Ansprüche, **dadurch gekennzeichnet, dass** jede Markierung rund ist.

7. Drehwinkelsensorsystem nach einem der vorgenannten Ansprüche, **dadurch gekennzeichnet, dass** die Markierungen durch angrenzende Flächen komplementärer Farbe gebildet sind, insbesondere durch eine weisse und eine schwarze Halbkreisfläche, die sich zu einer zur Drehachse im Wesentlichen konzentrischen Kreisfläche zusammensetzt.

8. Drehwinkelsensorsystem nach einem der vorgenannten Ansprüche, **dadurch gekennzeichnet, dass** genau 2 Markierungen vorhanden sind.

9. Drehwinkelsensorsystem nach einem der vorgenannten Ansprüche, **dadurch gekennzeichnet, dass** mindestens zwei Markierungen eine unterschiedliche Grösse und/oder Form ihrer Flächen aufweisen und/oder dass mindestens 3 Markierungen, insbesondere genau 3 Markierungen vorhanden sind und/oder dass die mindestens 3 Markierungen in nicht alle im gleichen Winkelabstand zueinander um die Drehachse angeordnet sind.

10. Drehwinkelsensorsystem nach einem der vorgenannten Ansprüche, **dadurch gekennzeichnet, dass** die Markierungen in gleichem Abstand und/oder in radialer Symmetrie zur Drehachse angeordnet sind.

11. Drehwinkelsensorsystem nach einem der vorgenannten Ansprüche, **dadurch gekennzeichnet, dass** die Auswerteeinrichtung dazu ausgebildet ist, die Lage der Schwerpunkte (16) der Markierungsbilder auf der Pixelmatrix durch Auswertung von Teilüberdeckungen von Pixelpunkten durch Markierungsbilder zu ermitteln, insbesondere durch Auswertung von Grauwerten der einzelnen ein Markierungsbild darstellenden Pixelpunkte, insbesondere durch Gewichtung der Lage der einzelnen ein Markierungsbild darstellenden Pixelpunkte aufgrund ihrer jeweiligen Helligkeitswerte.

12. Drehwinkelsensorsystem nach einem der vorgenannten Ansprüche, **dadurch gekennzeichnet, dass** die Auswerteeinrichtung dazu ausgebildet ist, aus den Schwerpunkten der Markierungsbilder auf der Pixelmatrix einen Messwert zu generieren für die Drehwinkelstellung und/oder Drehwinkelveränderung und/oder Winkelgeschwindigkeit und/oder Winkelbeschleunigung der Drehwelle insbesondere durch Trigonometrie und/oder insbesondere durch Vergleich mit dem Messwert oder den Schwerpunkten einer oder mehrerer vorhergehender Pixelbilder.

13. Drehwinkelsensorsystem nach einem der vorgenannten Ansprüche, **dadurch gekennzeichnet, dass** die Auswerteeinrichtung dazu ausgebildet ist,

- aus der Lage der Schwerpunkte und/oder Daten zur Bildausdehnung der Markierungsbilder eines oder mehrerer zeitlich versetzter Pixelbilder und/oder bestimmter Daten zur Drehwinkelstellung und/oder Winkelgeschwindigkeit
- einen oder mehrere Teilbereiche der Pixelmatrix zu bestimmen, insbesondere entsprechend der Anzahl an Markierungen, innerhalb derer die Markierungsbilder für ein folgendes Pixelbild mindestens teilweise erwartet werden
- und für dieses folgende Pixelbild ausschliesslich den einen oder die mehrere Teilbereiche der Pixelmatrix auszuwerten.

## Claims

1. Rotary angle senor system (4)

   - for determining the rotary angle position and/or angular speed of a rotary shaft (1) which extends along an axis of rotation (2), comprising
   - at least two optical markings (5) on the rotary shaft,
   - an optical sensor (6) with a pixel matrix (7) having pixel points (8),
   - an imaging device (9) for imaging each marking in a substantially axial direction (11) on the pixel matrix as a marking image (13), and
   - an evaluation device (15) for reading and evaluating the pixel matrix in order to determine data in relation to the rotary angle position and/or angular speed,
   - wherein the markings, the imaging device and pixel points are designed in such a way that the marking images on the pixel matrix have at least the area of a pixel point,

   **characterised in that**

   - the evaluation device is designed to determine the location of the central focal points (16) of the marking images on the pixel matrix with submatrix division.

2. Rotary angle senor system according to claim 1, **characterised in that** the markings, the imaging device and pixel points are designed such that the marking images have

- at most 100 times, in particular at most 64 times, in particular at most 36 times, in particular at most 16 times, in particular at most 4 times, in particular at most one times the area of a pixel point and/or
- at least 1 times, in particular at least 2 times, in particular at least 4 times, in particular at least 16 times the area of a pixel point.

3. Rotary angle senor system according to any one of the preceding claims, **characterised in that** the pixel matrix has at most 128 x 128 pixel points, in particular at most 64 x 64, in particular at most 32 x 32, in particular at most 16 x 16, in particular at most 8 x 8 pixel points and/or

- the evaluation device is designed to read and/or evaluate at most a number corresponding to 128 x 128 pixel points, in particular at most corresponding to 64 x 64, in particular at most corresponding to 32 x 32, in particular at most corresponding to 16 x 16, in particular at most corresponding to 8 x 8, in particular at most corresponding to 4 x 4, in particular at most corresponding to 2 x 2.

4. Rotary angle senor system according to any one of the preceding claims, **characterised in that** each marking is arranged on a surface (3) at an angle to the axis of rotation, in particular on a surface (3) perpendicular to the axis of rotation, in particular on an end surface (3) of the axis of rotation.

5. Rotary angle senor system according any one of the preceding claims, **characterised in that** each marking, the pixel matrix and the imaging device are optically effective in the visible spectrum and/or in the IR spectrum and/or in the UV spectrum, in particular **in that** the marking is formed as a white marking on a black background or vice versa.

6. Rotary angle senor system according to any one of the preceding claims, **characterised in that** each marking is round.

7. Rotary angle senor system according to any one of the preceding claims, **characterised in that** the markings are formed by adjacent surfaces with complementary colours, in particular by a white and a black semi-circular surface, which combine to form a circular surface substantially concentric to the axis of rotation.

8. Rotary angle senor system according to any one of the preceding claims, **characterised in that** exactly 2 markings are provided.

9. Rotary angle senor system according to any one of the preceding claims, **characterised in that** at least two markings have a different size and/or surface shape and/or **in that** at least 3 markings, in particular exactly 3 markings are provided and/or **in that** the at least 3 markings are not all arranged at the same angular distance from one another around the axis of rotation.

10. Rotary angle senor system according to any one of the preceding claims, **characterised in that** the markings are arranged at the same distance and/or with radial symmetry in relation to the axis of rotation.

11. Rotary angle senor system according to any one of the preceding claims, **characterised in that** the evaluation device is designed to determine the location of the central focal points (16) of the marking images on the pixel matrix by evaluating partial coverage of pixel points by marking images, in particular by evaluating grayscale values of the individual pixel points depicting a marking image, in particular by weighting the location of the individual pixel points depicting a marking image on the basis of the respective brightness values thereof.

12. Rotary angle senor system according to any one of the preceding claims, **characterised in that** the evaluation device is designed to generate a measurement value for the rotary angle position and/or rotary angle change and/or angular speed and/or angular acceleration of the rotary shaft from the central focal points of the marking images on the pixel matrix, in particular by trigonometry and/or in particular by comparison with the measurement value or the central focal points of one or more of the preceding pixel images.

13. Rotary angle senor system according to any one of the preceding claims, **characterised in that** the evaluation device is designed to determine,

- from the location of the central focal points and/or data in relation to the image extension of the marking images of one or more time-offset pixel images and/or specific data in relation to the rotary angle position and/or angular speed,
- one or more portions of the pixel matrix, in particular corresponding to the number of markings, within which the marking images for a subsequent pixel image are at least partly expected,
- and only to evaluate the one or more portions of the pixel matrix for this subsequent pixel image.

## Revendications

1. Système de capteur d'angle de rotation (4)

   - pour déterminer la position d'angle de rotation et/ou la vitesse angulaire d'un arbre rotatif (1) qui s'étend le long d'un axe de rotation (2),
   - avec au moins deux repères optiques (5) sur l'arbre rotatif,
   - avec un capteur optique (6) présentant une matrice de pixels (7) avec des points de pixel (8),
   - avec un dispositif de représentation (9) pour représenter chaque repère dans une direction sensiblement axiale (11) sur la matrice de pixels sous la forme d'une image de repère (13), et
   - un dispositif d'exploitation (15) pour lire et exploiter la matrice de pixels afin de déterminer des données sur la position d'angle de rotation et/ou la vitesse angulaire,
   - les repères, le dispositif de représentation et des points de pixel sont conçus de telle sorte que les images de repère sur la matrice de pixels représentent au moins la surface d'un point de pixel,

   **caractérisé en ce que**

   - le dispositif d'exploitation est conçu pour déterminer la position des centres de gravité (16) des images de repère sur la matrice de pixels avec une division de sous-matrice.

2. Système de capteur d'angle de rotation selon la revendication 1, **caractérisé en ce que** les repères, le dispositif de représentation et des points de pixel sont conçus de telle sorte que les images de repère

   - représentent au plus 100 fois, en particulier au plus 64 fois, en particulier au plus 36 fois, en particulier au plus 16 fois, en particulier au plus 4 fois, en particulier au plus une fois la superficie d'un point de pixel, et/ou
   - représentent au moins une fois, en particulier au moins 2 fois, en particulier au moins 4 fois, en particulier au moins 16 fois la superficie d'un point de pixel.

3. Système de capteur d'angle de rotation selon l'une des revendications précédentes, **caractérisé en ce que**

   - la matrice de pixels a au plus 128 x 128 points de pixel, en particulier au plus 64 x 64, en particulier au plus 32 x 32, en particulier au plus 16 x 16, en particulier au plus 8 x 8 points de pixels, et/ou
   - le dispositif d'exploitation est conçu pour lire et/ou exploiter au plus un nombre correspondant à 128 x 128 points de pixels, en particulier au plus un nombre correspondant à 64 x 64, en particulier au plus un nombre correspondant à 32 x 32, en particulier au plus un nombre correspondant à 16 x 16, en particulier au plus un nombre correspondant à 8 x 8, en particulier au plus un nombre correspondant à 4 x 4, en particulier au plus un nombre correspondant à 2 x 2 points de pixel.

4. Système de capteur d'angle de rotation selon l'une des revendications précédentes, **caractérisé en ce que** chaque repère est disposé sur une surface (3) formant un angle par rapport à l'axe de rotation, en particulier sur une surface (3) perpendiculaire à l'axe de rotation, en particulier sur une surface d'extrémité (3) de l'axe de rotation.

5. Système de capteur d'angle de rotation selon l'une des revendications précédentes, **caractérisé en ce que** chaque repère, la matrice de pixels et le dispositif de représentation sont optiquement efficaces dans le spectre visible et/ou dans le spectre infrarouge et/ou dans le spectre UV, en particulier **en ce que** le repère est formé sous la forme d'un repère blanc sur un fond noir ou inversement.

6. Système de capteur d'angle de rotation selon l'une des revendications précédentes, **caractérisé en ce que** chaque repère est rond.

7. Système de capteur d'angle de rotation selon l'une des revendications précédentes, **caractérisé en ce que** les repères sont formés par des surfaces adjacentes de couleurs complémentaires, en particulier par une surface en demi-cercle blanche et une surface en demi-cercle noire, qui se combinent en une surface circulaire sensiblement concentrique à l'axe de rotation.

8. Système de capteur d'angle de rotation selon l'une des revendications précédentes, **caractérisé en ce qu'**il est prévu exactement 2 repères.

9. Système de capteur d'angle de rotation selon l'une des revendications précédentes, **caractérisé en ce qu'**au moins deux repères présentent une taille et/ou une forme de leur surface différentes, et/ou en ce qu'il est prévu au moins 3 repères, en particulier exactement 3 repères, et/ou en ce que les au moins 3 repères ne sont pas tous disposés à la même distance angulaire les uns des autres autour de l'axe de rotation.

10. Système de capteur d'angle de rotation selon l'une des revendications précédentes, **caractérisé en ce que** les repères sont disposés à la même distance et/ou selon une symétrie radiale par rapport à l'axe de rotation.

**11.** Système de capteur d'angle de rotation selon l'une des revendications précédentes, **caractérisé en ce que** le dispositif d'exploitation est conçu pour déterminer la position des centres de gravité (16) des images de repère sur la matrice de pixels par l'exploitation du chevauchement partiel de points de pixels par les images de repère, notamment en exploitant les valeurs de gris de chaque point de pixels représentant une image de repère, en particulier en pondérant la position des différents points de pixels représentant une image de repère sur la base de leurs valeurs de luminosité respectives.

**12.** Système de capteur d'angle de rotation selon l'une des revendications précédentes, **caractérisé en ce que** le dispositif d'exploitation est conçu pour, à partir des centres de gravité des images de repère sur la matrice de pixels, générer une valeur de mesure pour la position de rotation angulaire et/ou la variation d'angle de rotation et/ou la vitesse angulaire et/ou l'accélération angulaire de l'arbre rotatif, en particulier par trigonométrie et/ou en particulier par comparaison à la valeur de mesure ou les centres de gravité d'une ou plusieurs images de pixel précédentes.

**13.** Système de capteur d'angle de rotation selon l'une des revendications précédentes, **caractérisé en ce que** le dispositif d'exploitation est conçu pour

> - à partir de la position des centres de gravité et/ou de données relatives à l'étendue des images de repère d'une ou plusieurs images pixélisées décalées dans le temps et/ou de certaines données relatives à la position d'angle de rotation et/ou à la vitesse angulaire,
> - déterminer une ou plusieurs parties de la matrice de pixels, en particulier correspondant au nombre de repères, dans lesquelles les images de repère pour une image pixélisée suivante sont au moins partiellement attendues,
> - et pour exploiter uniquement la ou les parties de la matrice de pixels pour cette image pixélisée suivante.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004094957 A1